# EUROPEAN PATENT SPECIFICATION

(11) **EP 4 333 090 B1**
(45) Date of publication and mention of the grant of the patent: **21.10.2026**
(21) Application number: 22838018.4
(22) Date of filing: 07.07.2022
(51) Int. Cl.: H01M 4/04, H01M 4/13, B05D 1/32

(54) **ELECTRODE AND MANUFACTURING METHOD THEREFOR**
ELEKTRODE UND HERSTELLUNGSVERFAHREN DAFÜR
ÉLECTRODE ET SON PROCÉDÉ DE FABRICATION

(30) Priority: 08.07.2021 KR 20210089425
(43) Date of publication of application: 06.03.2024
(73) Proprietor: LG Energy Solution, Ltd., Seoul 07335 (KR)
(72) Inventor: LEE, Seo Jun, Daejeon 34122 (KR); LEE, Hyojin, Daejeon 34122 (KR); KIM, Tae Su, Daejeon 34122 (KR); LEE, Hyuk Soo, Daejeon 34122 (KR)
(74) Representative: Goddar, Heinz J.
(86) International application number: PCT/KR2022/009862
(87) International publication number: WO 2023/282666

(56) References cited:
- EP-A1- 3 823 061
- JP-A- 2000 251 942
- JP-A- 2008 237 968
- JP-A- 2015 204 257
- KR-A- 20050 096 926
- KR-A- 20200 016 285
- KR-A- 20210 065 033
- US-A1- 2013 260 017
- US-A1- 2018 358 645

## Description

### [Technical Field]

The present invention relates to a method for preparing an electrode, and specifically, to a method for preparing an electrode in which a corner portion where an upper surface of an active material layer and a side wall surface forming a thickness of the active material layer meet is formed in a right-angled shape.

### [Background Art]

As demands for mobile devices and electric vehicles increase, demands for secondary batteries are rapidly increasing. In particular, lithium secondary batteries having high energy density and voltage have been commercialized and widely used.

A lithium secondary battery has a structure in which an electrolyte including a lithium salt is impregnated into an electrode assembly having a porous separator provided between a positive electrode and a negative electrode, each of which has an active material coated on a current collector. The method of preparing an electrode includes mixing/dispersing an active material, a binder and a conductor into a solvent to prepare an active material slurry; coating the active material slurry on a thin-film-type current collector and drying thereof to form an active material layer on a current collector; and finally pressing step to increase capacity density of the electrodes and to increase adhesion between the current collector and the active material.

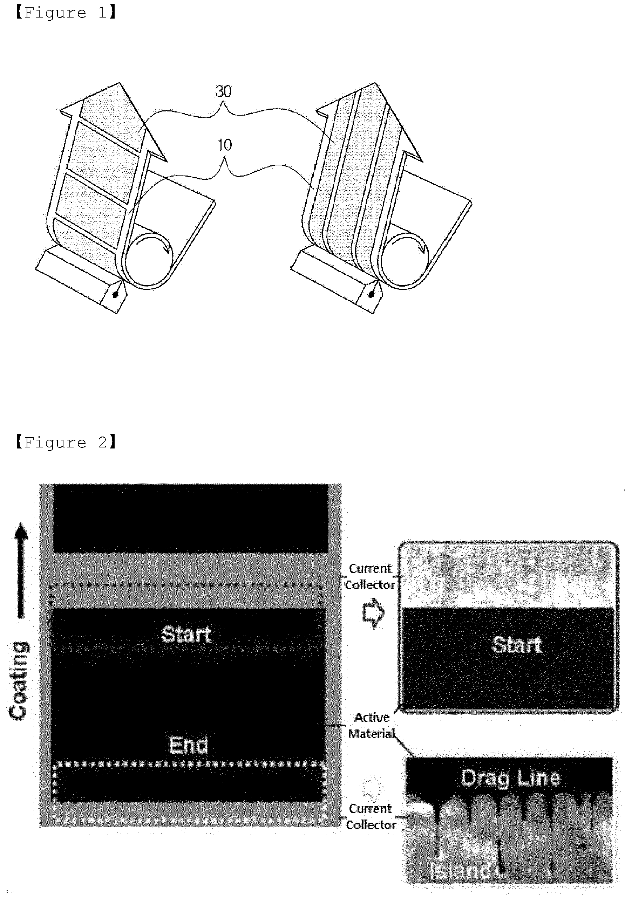

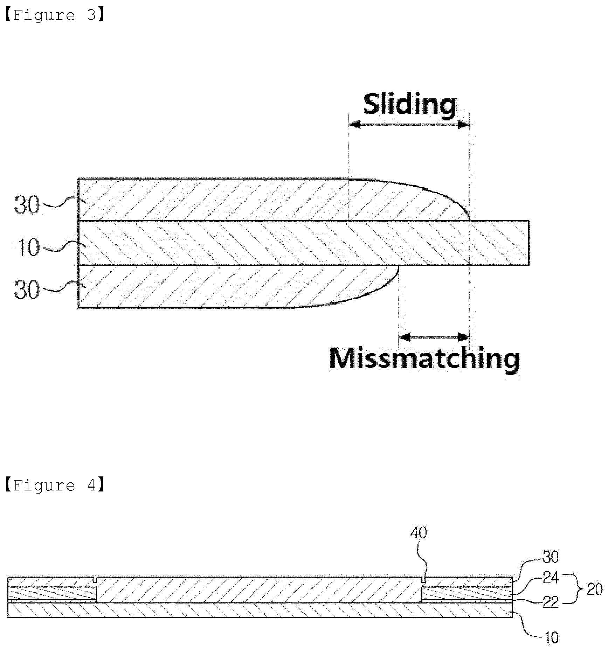

It is known that, when applying the active material slurry on the current collector, a drag line and/or island are formed as illustrated in FIG. 2, making it difficult to form a uniform surface at an end portion of the active material layer. In addition, as illustrated in FIG. 3, a sliding portion of gradually decreasing the thickness of the active material layer is formed at the edge of the active material layer causing a problem of reduced capacity of the active material layer. In addition, when applying the slurry on both surfaces of the current collector, mismatching, (i.e., the respective position of the slurry coated on the upper surface and the lower surface failing to match), occurs as illustrated in FIG. 3. Such mismatching mislocates the position of active material layer when facing the positive electrode/negative electrode, and such a mislocated portion reduces efficiency of charge and discharge. Particularly, the mismatching portion may cause lithium precipitated on the negative electrode surface, and when such lithium precipitation occurs for a long period of time, a decrease in the battery capacity occurs.

Accordingly, there have been needs for methods capable of uniformly forming an end portion of an active material layer and preventing formation of a sliding portion and/or a mismatching portion.

### [Prior Art Document]

Japanese Laid-open Patent Publication No. 2000-251942

EP 3 823 061 A1 discloses a secondary battery active material coating method and coating apparatus. The method is a method of coating an active material on an electrode current collector of a secondary battery, the method comprising the steps of: disposing a guide member on each of the left and right sides based on a moving direction of the electrode current collector, and coating the active material onto the electrode current collector between the two guide members.

JP 2015204257 A discloses a method of manufacturing a non-aqueous electrolyte secondary battery.

### [Disclosure]

### [Technical Problem]

The present disclosure has been devised to resolve such problems of the prior art, and ,in one aspect, is directed to providing a method for preparing an electrode capable of uniformly forming an end portion of an active material layer, and preventing formation of a sliding portion and/or a mismatching portion.

In another aspect, the present disclosure is also directed to providing a method for preparing an electrode capable of forming a corner portion where an upper surface of the active material layer and a side wall surface forming a thickness of the active material layer meet in a right-angled shape.

### [Technical Solution]

In order to achieve the above objects, the present disclosure provides a method for preparing an electrode, including:
(a) designating a current collector surface into an active material layer-laminated portion and an active material layer-nonlaminated portion, and attaching a masking tape to the active material layer-nonlaminated portion;
(b) laminating an active material layer on the masking tape-attached current collector;
(c) forming a cutting groove on an upper surface of the active material layer along a boundary of the masking tape at the bottom and the active material layer; and
(d) removing the masking tape along the cutting groove to form the active material layer-nonlaminated portion.

Further embodiments are disclosed in the dependent claims.

### [Advantageous Effects]

A method for preparing an electrode according to an aspect of the present invention is effective in uniformly forming an end portion of an active material layer, and preventing formation of a sliding portion and/or a mismatching portion.

In addition, the present disclosure provides a method capable of forming a corner portion where an upper surface of the active material layer and a side wall surface forming a thickness of the active material layer meet in a right-angled shape.

In addition, the electrode is effective in increasing battery capacity by forming a corner portion where an upper surface of the active material layer and a side wall surface forming a thickness of the active material layer meet in a right-angled shape.

### [Description of Drawings]

FIG. 1 is a diagram schematically illustrating a method for forming an electrode of the prior art,
FIG. 2 is a diagram showing a problem occurring when applying an active material on a current collector according to the prior art,
FIG. 3 is a diagram schematically illustrating a sliding portion and a mismatching portion occurring when applying an active material on a current collector according to the prior art,
FIG. 4 to FIG. 6 are diagrams each illustrating one embodiment of a method for preparing an electrode of the present invention, and
FIG. 7 and FIG. 8 are diagrams each illustrating one embodiment of attaching a masking tape by a roll-to-roll process in a method for preparing an electrode of the present invention.

### [Best Mode]

Hereinafter, the embodiments of the present invention will be described in detail with reference to accompanying drawings so that those skilled in the art may readily implement the present invention. However, the present invention may be embodied in various different forms and is not limited to the embodiments described herein. Throughout the specification, like reference numerals indicate like parts.

A method for preparing an electrode of one embodiment of the present invention includes:
(a) designating a current collector surface into an active material layer-laminated portion and an active material layer-nonlaminated portion, and attaching a masking tape to the active material layer-nonlaminated portion;
(b) laminating an active material layer on the masking tape-attached current collector;
(c) forming a cutting groove on an upper surface of the active material layer along a boundary of the masking tape at the bottom and the active material layer; and
(d) removing the masking tape along the cutting groove to form the active material layer-nonlaminated portion.

In the present disclosure, the active material layer-nonlaminated portion is also referred to as a "non-coating portion", and means a portion where an electrode tap is formed.

Existing methods for preparing an electrode also disclose techniques using a masking tape, but have a disadvantage in that, when removing a masking tape after laminating an active material layer, the cut portion of the active material layer is not able to form a uniform surface. In other words, active material slurry forming the active material layer includes active material particles, conductor particles, and a binder, and by these being bound by the binder at the time when removing the masking tape to form aggregates (clumps) of various sizes, it is difficult to form a uniform cross-section of the active material layer when the active material layer on the upper surface of the masking tape is physically cut by removing the masking tape.

The inventors of the present invention have made extensive efforts in order to improve such disadvantages of the prior art, and have found out that such problems are significantly improved when, as illustrated in FIG. 4, forming a cutting groove 40 on an upper surface of the active material layer along a boundary between a masking tape 20 at the bottom and an active material layer 30.

In one embodiment of the present invention, as the masking tape 20, those known in the art may be used. As the masking tape, a pressure-sensitive adhesive tape may be preferably used, and the pressure-sensitive adhesive tape may include a film substrate 24 and a pressure-sensitive adhesive layer 22 formed on one surface of the film substrate. In this case, binding strength of the pressure-sensitive adhesive layer 22 for a current collector 10 needs to be weaker than binding strength of the pressure-sensitive adhesive layer 22 for the film substrate 24, and such a difference in the binding strength is preferred because the pressure-sensitive adhesive tape is removed without remaining on the current collector.

In one embodiment of the present invention, the cutting groove in the step (c) may be formed using a means known in the art such as a knife, and particularly, is preferably formed using a laser. This is due to the fact that, when using a knife, uniformly forming a groove surface of the cutting groove is difficult, working becomes inconvenient due to active material fragments removed during the groove forming process, and quality of the active material layer may be damaged.

The shape of the cutting groove is not particularly limited, and may be an alphabet U-like shape, or V-like shape. In this case, the alphabet U-like shaped cutting groove may have a shape in which the bottom surface and the wall surface are formed to be perpendicular to each other.

The cutting groove may be formed to have a width of 10 to 200 *µ*m and a depth of 10 to 200 *µ*m, however, the cutting groove size needs to be formed differently depending on the active material layer thickness and the masking tape thickness, and is not limited to the above range.

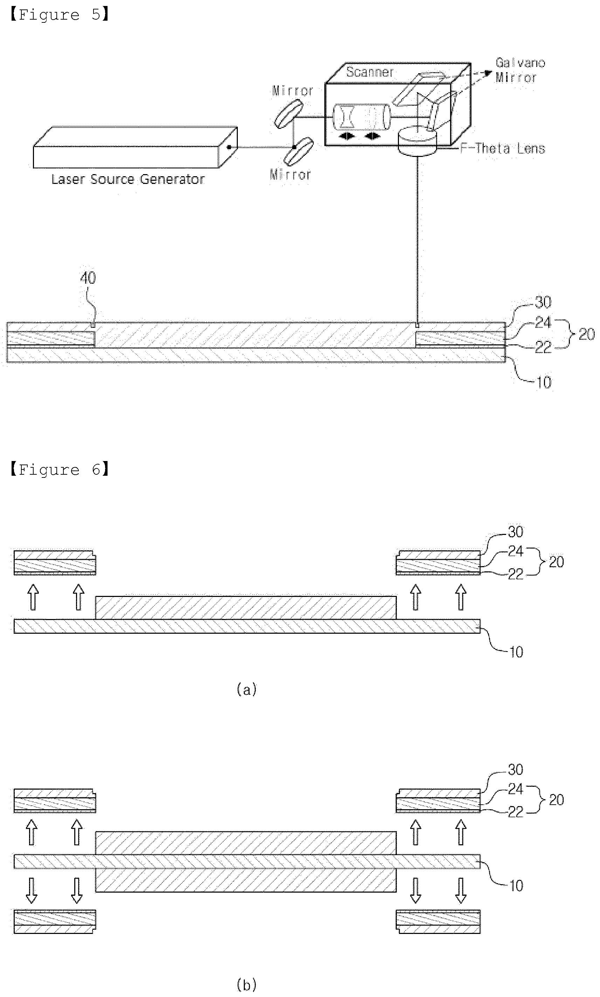

As a laser device that generates the laser, laser devices known in the art may be used. The laser device may be formed including, as illustrated in FIG. 5, a laser source generator, a delivery mirror, a laser beam width controller, or a scanner unit, and the scanner may include a Galvano mirror, or a theta lens. The laser source generator may be, for example, an IR fiber laser source generator, and the laser wavelength may be 1000 to 1100 nm and preferably 1060 to 1080 nm, but is not limited thereto.

In one embodiment of the present invention, the cutting groove may be formed using a laser after supplying moisture to the cutting groove forming site. Forming the cutting groove using a laser without supplying moisture is not preferred since a problem of active material deterioration caused by heat of the laser (generating heat affected zone) occurs. Accordingly, in the present invention, moisture is supplied in advance before forming the cutting groove by a laser, and then a laser is applied. A method of supplying moisture is not particularly limited, and, for example, moisture may be supplied by spraying water to the active material layer using a spray device.

The moisture is, for example, preferably supplied 5 to 30 seconds prior to applying a laser. This is due to the fact that sufficient time is required for moisture to be supplied into the active material layer before applying a laser. However, the time is not limited to the above-mentioned range since the degree of moisture absorption varies depending on the composition of the active material layer.

In one embodiment of the present invention, the step of (b) laminating an active material layer may be implemented by coating the active material on the active material-laminated portion and a part or all of the upper portion of the masking tape. In addition, the step of laminating an active material layer may further include, after coating the active material, pressing the coated active material layer. The active material coating and pressing steps may be implemented using methods known in the art.

In one embodiment of the present invention, the cutting groove in the step (c) is, as illustrated in FIG. 4, preferably formed on a side of the active material layer positioned on the masking tape around the boundary of the masking tape and active material layer. The cutting groove being formed on the above-mentioned position may be advantageous for securing battery capacity because, as illustrated in FIG. 6, the cross-section of the remaining active material layer may be formed close to a right angle after removing the masking tape.

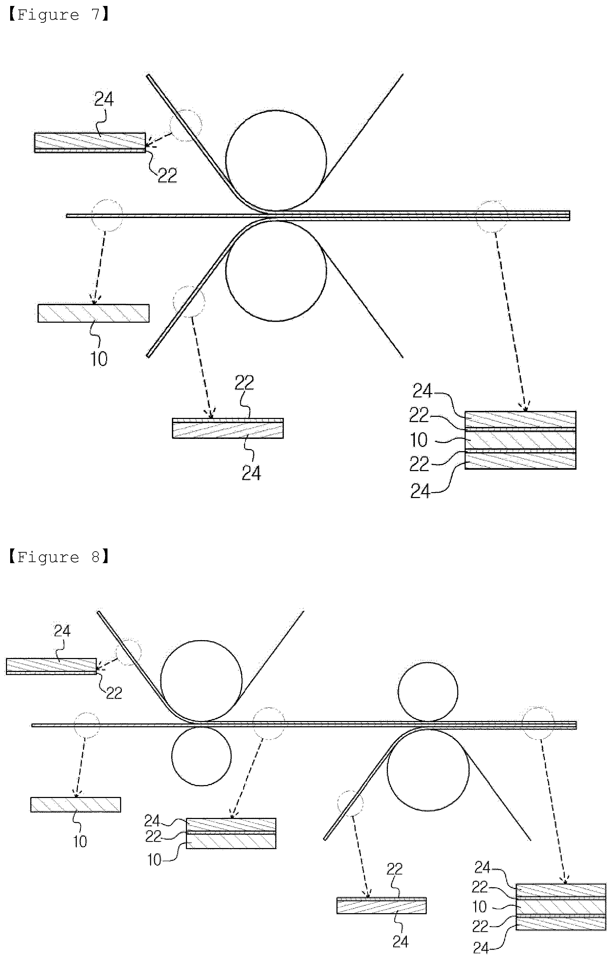

In one embodiment of the present invention, attaching the masking tape in the steps (a) to (d) may be, as illustrated in FIG. 7 and FIG. 8, implemented by a roll-to-roll process. In this case, in FIG. 7 and FIG. 8, the masking tape may include a film substrate and a pressure-sensitive adhesive layer (PSA), and a release film may be further attached to the pressure-sensitive adhesive layer. The release film may be removed in the step prior to adhering the masking tape to the current collector.

After attaching the masking tape as above, the active material layer may be laminated on, by a common roll-to-roll process, the current collector to which the masking tape is not attached, or the portion to which the masking tape is attached and the current collector to which the masking tape is not attached.

The roll-to-roll process may be implemented using methods known in the art.

In addition, provided is an electrode prepared using the preparation method disclosed herein, including
a current collector and an active material layer laminated on one surface or both surfaces of the current collector,
wherein a corner portion adjacent to the active material layer-nonlaminated portion, and where an upper surface of the active material layer and a side wall surface forming a thickness of the active material layer meet includes a partial form of the cutting groove as illustrated in FIG. 6.

The corner portion where an upper surface of the active material layer and a side wall surface forming a thickness of the active material layer meet includes a partial form of the cutting groove, thereby being formed in a right-angled shape.

The right-angled shape includes a substantially right-angled shape as well as a right angle following strict criteria. Particularly, the side wall surface forming a thickness of the active material layer may be a side wall surface in a direction where an electrode tap is formed.

In addition, the electrode may be formed using the method for preparing an electrode in the present disclosure.

The current collector is a positive electrode current collector or a negative electrode current collector, and current collectors known in the art may be used without limitation. For examples, foil prepared with copper, aluminum, gold, nickel, a copper alloy, or a combination thereof may be used as the current collector.

In addition, the active material layer may be a positive electrode active material layer or a negative electrode active material layer. The active material layer may be formed as active material slurry including a positive electrode active material or a negative electrode active material and a binder, and the active material slurry may further include a conductive material, and as necessary, may also further include a dispersant.

As the positive electrode active material, the negative electrode active material, the binder and the conductive material, components known in the art may be used without limitation.

The positive electrode active material may be, for example, lithium manganese oxide, lithium cobalt oxide, lithium nickel oxide, lithium iron oxide, LiNiₓMn_{y}Co_{z}O₂ (NMC) that is a three-component positive electrode material, lithium composite oxides obtained by combining these. In a lithium-sulfur battery, a sulfur-carbon composite may be included as the positive electrode active material.

The negative electrode active material may be, for example, LiTi₂(PO₄)₃, Li₃V₂(PO₄)₃, LiVP₂O₇, LiFeP₂O₇, LiVPO₄F, LiVPO₄O, or LiFeSO₄F. The negative electrode active material may have a carbon coating layer formed on the surface.

The conductor may be, for example, carbon black such as Super-P, denka black, acetylene black, ketjen black, channel black, furnace black, lamp black, to thermal black; carbon derivatives such as carbon nanotubes or fullerene; conductive fibers such as carbon fibers or metal fibers; fluorocarbon, aluminum, metal powders such as nickel powder; or conductive polymers such as polyaniline, polythiophene, polyacetylene or polypyrrole.

The electrode may be a positive electrode or a negative electrode, and a method for preparing the same is not particularly limited, and the electrode may be prepared in a form in which a positive electrode active material layer or a negative electrode active material layer is bound to a current collector according to methods commonly known in the art.

The electrode may be used in a secondary battery, and for example, may be used in a lithium ion secondary battery.

### [Description of Symbol]

10: Current Collector
20: Masking Tape
22: Pressure-Sensitive Adhesive Layer
24: Film Substrate
30: Active Material layer
40: Cutting Groove

## Claims

1. A method for preparing an electrode, comprising:
(a) designating a current collector surface into an active material layer-laminated portion and an active material layer-nonlaminated portion, and attaching a masking tape (20) to the active material layer-nonlaminated portion;
(b) laminating an active material layer (30) on the masking tape-attached current collector (10);
(c) forming a cutting groove (40) on an upper surface of the active material layer (30) along a boundary of the masking tape (20) at a bottom and the active material layer (30); and
(d) removing the masking tape (20) along the cutting groove (40) to form the active material layer-nonlaminated portion.

2. The method of claim 1, wherein the cutting groove (40) in step (c) is formed using a laser.

3. The method of claim 2, wherein the cutting groove (40) is formed using a laser after supplying moisture to the cutting groove forming site.

4. The method of claim 1, wherein step (b) includes active material coating and pressing.

5. The method of claim 1, wherein the cutting groove (40) in step (c) is formed on a side of the active material layer (30) positioned on the masking tape (20) around the boundary line of the masking tape (20) and active material layer (30).

6. The method of claim 1, wherein the masking tape (20) is a pressure-sensitive adhesive tape comprising a film substrate (24), on one surface of which a pressure-sensitive adhesive layer is formed.

7. The method of claim 1, wherein step (a) to step (d) are implemented by a roll-to-roll process.

## Patentansprüche

1. Verfahren zur Herstellung einer Elektrode, umfassend:
(a) Einteilen einer Stromabnehmeroberfläche in einen Aktivmaterialschicht-laminierten Abschnitt und einen Aktivmaterialschicht-nichtlaminierten Abschnitt und Anbringen eines Maskierungsbands (20) an dem Aktivmaterialschicht-nichtlaminierten Abschnitt;
(b) Laminieren einer Aktivmaterialschicht (30) auf den an dem Maskierungsband angebrachten Stromabnehmer (10);
(c) Bilden einer Schneidnut (40) auf einer oberen Oberfläche der Aktivmaterialschicht (30) entlang einer Grenze des Maskierungsbands (20) an einem Boden und der Aktivmaterialschicht (30); und
(d) Entfernen des Maskierungsbands (20) entlang der Schneidnut (40), um den Aktivmaterialschicht-nichtlaminierten Abschnitt zu bilden.

2. Verfahren nach Anspruch 1, wobei die Schneidnut (40) in Schritt (c) unter Verwendung eines Lasers gebildet wird.

3. Verfahren nach Anspruch 2, wobei die Schneidnut (40) unter Verwendung eines Lasers gebildet wird, nachdem der Schneidnutbildungsstelle Feuchtigkeit zugeführt wurde.

4. Verfahren nach Anspruch 1, wobei Schritt (b) das Beschichten und Pressen des Aktivmaterials beinhaltet.

5. Verfahren nach Anspruch 1, wobei die Schneidnut (40) in Schritt (c) auf einer Seite der Aktivmaterialschicht (30) gebildet wird, die auf dem Maskierungsband (20) um die Grenzlinie des Maskierungsbands (20) und der Aktivmaterialschicht (30) positioniert ist.

6. Verfahren nach Anspruch 1, wobei das Maskierungsband (20) ein druckempfindliches Klebeband ist, das ein Filmsubstrat (24) umfasst, auf dessen einer Oberfläche eine druckempfindliche Klebeschicht gebildet ist.

7. Verfahren nach Anspruch 1, wobei Schritt (a) bis Schritt (d) durch einen Rolle-zu-Rolle-Prozess implementiert werden.

## Revendications

1. Procédé de préparation d'une électrode, consistant à :
(a) désigner une surface de collecteur de courant dans une couche de matériau actif-partie stratifiée et une couche de matériau actif-partie non stratifiée, et fixer un ruban de masquage (20) sur la couche de matériau actif-partie non stratifiée ;
(b) stratifier une couche de matériau actif (30) sur le ruban de masquage-fixée au collecteur de courant (10) ;
(c) former un rainure de découpe (40) sur une surface supérieure de la couche de matériau actif (30) le long d'une limite du ruban de masquage (20) à une partie inférieure et sur la couche de matériau actif (30) ; et
(d) retirer le ruban de masquage (20) le long de la rainure de découpe (40) pour former la couche de matériau actif-partie non stratifiée.

2. Procédé selon la revendication 1, dans lequel la rainure de découpe (40) à l'étape (c) est formée en utilisant un laser.

3. Procédé selon la revendication 2, dans lequel la rainure de découpe (40) est formée en utilisant un laser après avoir fourni de l'humidité au site de formation de la rainure de découpe.

4. Procédé selon la revendication 1, dans lequel l'étape (b) inclut un revêtement de matériau actif et un pressage.

5. Procédé selon la revendication 1, dans lequel la rainure de découpe (40) à l'étape (c) est formée sur un côté de la couche de matériau actif (30) positionné sur le ruban de masquage (20) autour de la ligne limite du ruban de masquage (20) et sur la couche de matériau actif (30).

6. Procédé selon la revendication 1, dans lequel le ruban de masquage (20) est un ruban adhésif sensible à la pression comprenant un substrat de film (24), sur une surface duquel une couche adhésive sensible à la pression est formée.

7. Procédé selon la revendication 1, dans lequel les étapes (a) à (d) sont mises en œuvre par un processus de rouleau-à-rouleau.
